# EUROPEAN PATENT APPLICATION

(11) **EP 4 425 302 A1**
(43) Date of publication of application: **04.09.2024**
(21) Application number: 22886530.9
(22) Date of filing: 21.09.2022
(51) Int. Cl.: G06F 1/20

(54) **INFORMATION PROCESSING DEVICE, REMOTE OPERATION DEVICE, INFORMATION PROCESSING METHOD, AND REMOTE OPERATION METHOD**

(30) Priority: 25.10.2021 JP 2021174118
(71) Applicant: Sony Group Corporation, Tokyo 108-0075 (JP)
(72) Inventor: HARA, Mizuho, Tokyo 108-0075 (JP); SEYA, Masaki, Tokyo 108-0075 (JP); KASHIWAGI, Yasutaka, Tokyo 108-0075 (JP); YAGI, Takafumi, Tokyo 108-0075 (JP); KAWANO, Jiro, Tokyo 108-0075 (JP); TAKEUCHI, Ryosuke, Tokyo 108-0075 (JP); ISHIHARA, Tetsuji, Tokyo 108-0075 (JP)
(74) Representative: D Young & Co LLP
(86) International application number: PCT/JP2022/035050
(87) International publication number: WO 2023/074196

(57) **Abstract**

A smartphone (100) (which corresponds to an example of an "information processing device") is a portable information processing device, and includes: a temperature monitoring unit (107b) that monitors the temperature of a main body of the smartphone (100); and an application execution unit (107a) that executes an application, and in a case where notification of an increase in the temperature of the main body to a predetermined high-temperature range is provided by the temperature monitoring unit (107b), requires an operation from the remote controller 10 (which corresponds to an example of a "remote control device") for an operation of maintaining the operation of the application.

## Description

### Field

The present disclosure relates to an information processing device, a remote control device, an information processing method, and a remote control method.

### Background

In recent years, the spread of portable information processing devices such as smartphones and tablet terminals is remarkable. Furthermore, performance of these portable information processing devices has also been rapidly improving, and for example, models including a high-resolution out-camera and an in-camera are becoming mainstream.

In such an information processing device, various services such as a social networking service (SNS) have become widespread, and application software (hereinafter, referred to as a "camera application") using a camera is often used in order for a user to edit an image captured by the user oneself or upload the image to various services.

Incidentally, there is a problem that a main body of the information processing device easily becomes a high temperature by heat generation due to a high load at the time of using the camera application, particularly at the time of such as long-time moving image capturing.

In response to such a problem, there has been proposed a technique of acquiring a heat generation state of a target part among hardware of a system, and controlling the heat generation state of the entire system by changing an operation content of an operating application so as to change the heat generation state according to the acquired heat generation state (see, for example, Patent Literature 1).

### Citation List

### Patent Literature

Patent Literature 1: JP 2007-109085 A

### Summary

### Technical Problem

However, in the above-described conventional technology, there is still room for further improvement in preventing the user from being exposed to danger caused by heat generation due to a high load at the time of using the application.

For example, the camera application is usually used in a state where the user directly holds the information processing device. Therefore, in a case where the main body of the information processing device has a high temperature caused by heat generation due to a high load at the time of capturing a moving image or the like, there is a risk of the user getting a burn.

In this regard, the above-described conventional technique is merely intended to prevent malfunction of the system and deterioration of long-term reliability due to local heating of the hardware.

Therefore, the present disclosure proposes an information processing device, a remote control device, an information processing method, and a remote control method that can prevent the user from being exposed to danger caused by heat generation due to a high load at the time of using the application.

### Solution to Problem

In order to solve the above problems, one aspect of an information processing device according to the present disclosure is a portable information processing device, and includes: a temperature monitoring unit that monitors a temperature of a main body of the information processing device; and an application execution unit that executes an application, and in a case where notification of an increase in the temperature of the main body to a predetermined high-temperature range is provided by the temperature monitoring unit, requires an operation from a remote control device for an operation of maintaining an operation of the application.

### Brief Description of Drawings

FIG. 1 is a schematic explanatory diagram (part 1) of an information processing method according to an embodiment of the present disclosure.
FIG. 2 is a schematic explanatory diagram (part 2) of the information processing method according to the embodiment of the present disclosure.
FIG. 3 is a schematic explanatory diagram (part 3) of the information processing method according to the embodiment of the present disclosure.
FIG. 4 is a schematic explanatory diagram (part 4) of the information processing method according to the embodiment of the present disclosure.
FIG. 5 is a schematic explanatory diagram (part 5) of the information processing method according to the embodiment of the present disclosure.
FIG. 6 is a block diagram illustrating a configuration example of a smartphone according to the embodiment of the present disclosure.
FIG. 7 is a diagram illustrating an example of temperature monitoring information.
FIG. 8 is a diagram illustrating a state transition in information processing according to the embodiment of the present disclosure.
FIG. 9 is a diagram (part 1) illustrating a display example of a setting screen in a case where an EM is turned ON.
FIG. 10 is a diagram (part 2) illustrating a display example of the setting screen in a case where the EM is turned ON.
FIG. 11 is a diagram illustrating a display example in a case where the state transits to EM ON.
FIG. 12 is a diagram (part 1) illustrating a display example in a case where the temperature rises to a high-temperature range in a state of "Remote Controller ON (EM Inactive)".
FIG. 13 is a diagram (part 2) illustrating a display example in a case where the temperature rises to the high-temperature range in the state of "Remote Controller ON (EM Inactive)".
FIG. 14 is a diagram illustrating a display example in a case where the temperature rises to a limit range in a state of "Remote Controller ON (EM Active)".
FIG. 15 is an explanatory diagram in a case where an EM ON setting is held and the state returns in the state of EM ON.
FIG. 16 is a diagram illustrating a display example in a case where the EM ON setting is held and the state returns in the EM ON state.
FIG. 17 is an explanatory diagram in a case where the EM ON setting is held and the camera application is activated at high temperature.
FIG. 18 is a hardware configuration diagram illustrating an example of a computer that implements functions of the smartphone.

### Description of Embodiments

Hereinafter, embodiments of the present disclosure are described in detail with reference to the drawings. Note that, in each of the following embodiments, the same parts are denoted by the same reference numerals, and redundant description are omitted.

Furthermore, in the following description, a case where the portable information processing device used by the user is a smartphone 100 is described as an example.

Furthermore, in the following description, it is assumed that the remote control device according to the embodiment of the present disclosure is a remote controller 10, and the remote controller 10 can be connected to the smartphone 100 as a peripheral device (hereinafter, referred to as "accessory") of the smartphone 100 by Bluetooth (registered trademark). Furthermore, in the following, a case where the user captures a moving image using the camera application is described as an example.

In addition, the present disclosure is described according to the following order of items.
1. Outline
2. Configuration of Smartphone
3. State Transition
4. Modified Example
5. Hardware Configuration
6. Conclusion

### <<1. Outline>>

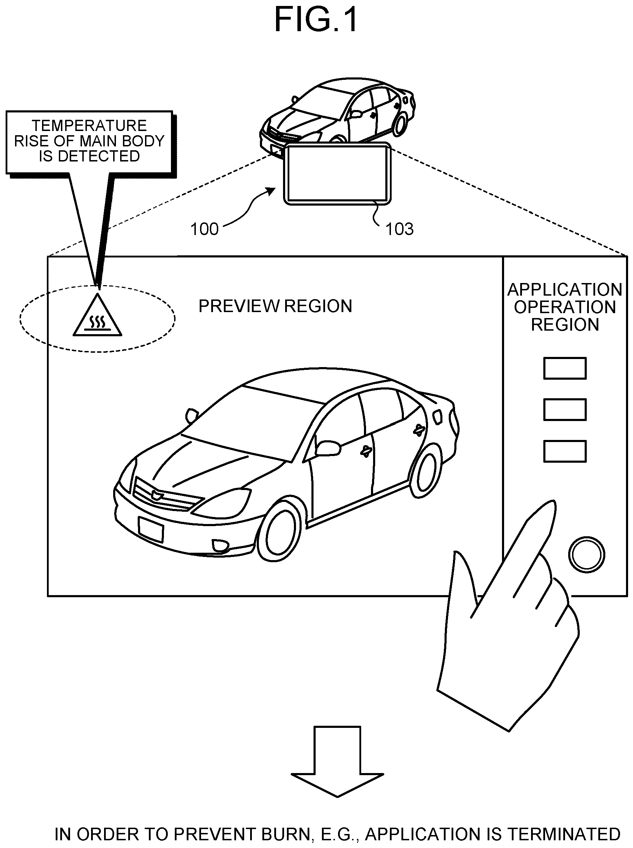

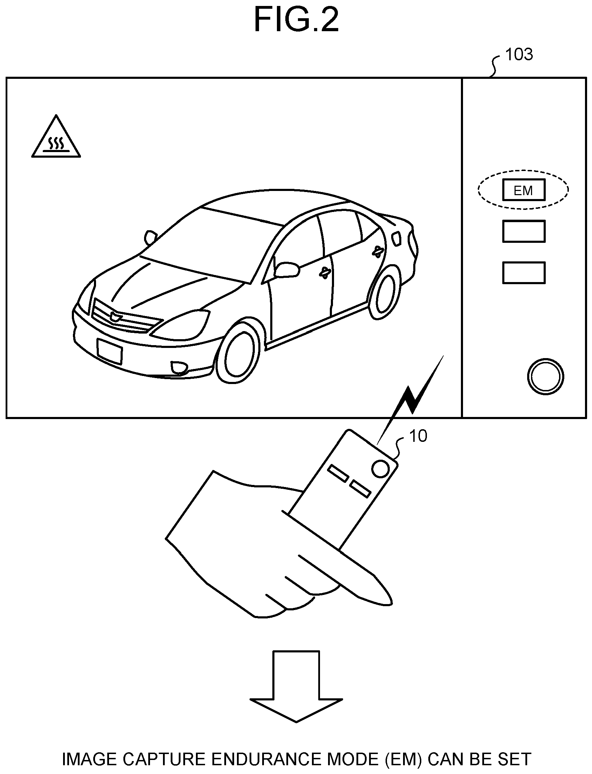

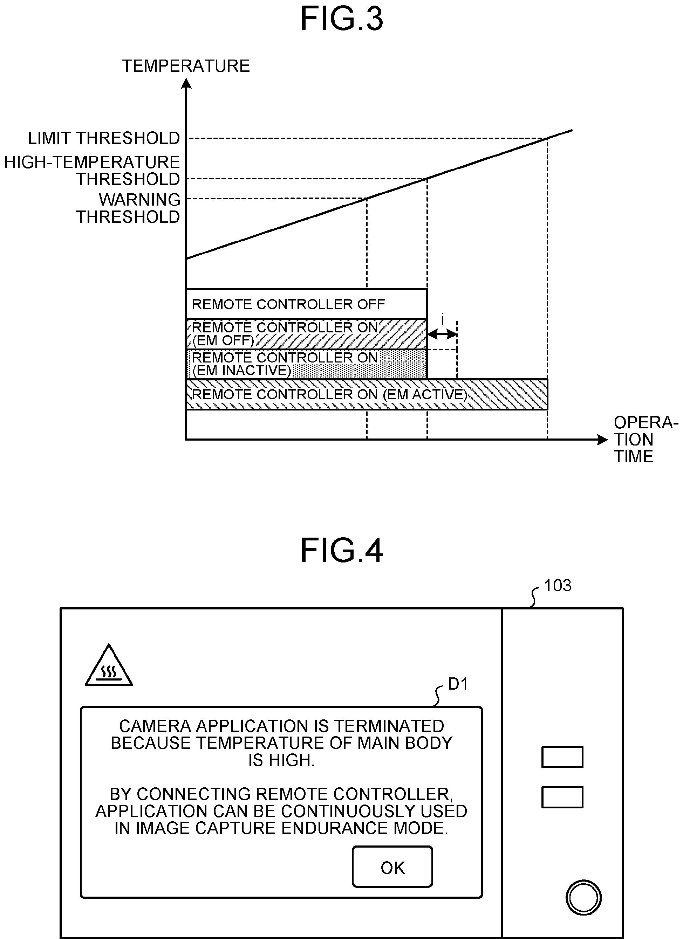

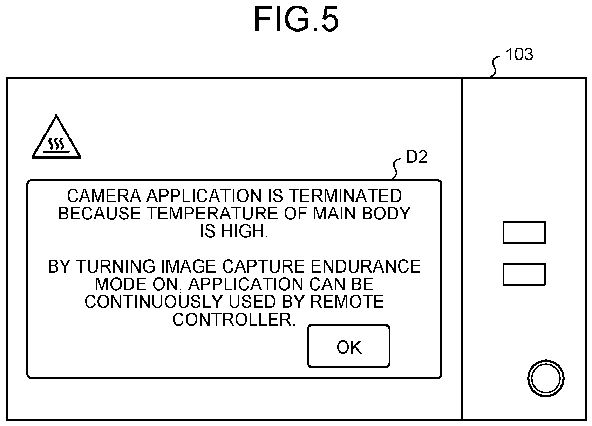

FIG. 1 is a schematic explanatory diagram (part 1) of an information processing method according to the embodiment of the present disclosure. Furthermore, FIG. 2 is a schematic explanatory diagram (part 2) of the information processing method according to the embodiment of the present disclosure. Furthermore, FIG. 3 is a schematic explanatory diagram (part 3) of the information processing method according to the embodiment of the present disclosure. Furthermore, FIG. 4 is a schematic explanatory diagram (part 4) of the information processing method according to the embodiment of the present disclosure. Furthermore, FIG. 5 is a schematic explanatory diagram (part 5) of the information processing method according to the embodiment of the present disclosure.

When the user uses the camera application by using the smartphone 100 and captures a moving image, the image capturing is normally performed in a state where the user directly holds the smartphone 100. Here, there is a problem that more load is easily applied at the time of capturing the moving image than at the time of capturing the still image, and the main body of the smartphone 100 easily becomes a high temperature by heat generation due to a high load if the load is applied for a long time.

In order to solve such a problem, as illustrated in FIG. 1, for example, when a temperature sensor mounted on the smartphone 100 detects a temperature rise of the main body, it is conceivable to adopt a method of displaying a high-temperature detection mark (see a portion of a closed-curve broken line in the drawing) on a display unit 103, and then, for example, terminating the application in order to prevent a burn.

However, in such a method, there is a problem that, for example, the image capturing scene is a highlight scene, and thus, even if the user wants to continue the image capturing as long as possible, the image capturing has to be unconditionally interrupted.

Therefore, in the information processing method according to the embodiment of the present disclosure, an image capture endurance mode (EM) is provided. The EM is an operation mode in which the image capturing can be continued until the temperature of the main body of the smartphone 100 becomes higher.

However, in the information processing method according to the embodiment of the present disclosure, as illustrated in FIG. 2, the EM can be set from the menu only in the remote controller ON state in which the remote controller 10 is connected to the smartphone 100.

That is, the EM can set whether or not the remote controller 10 can be used only in a state where the remote controller 10 is connected to the smartphone 100. Furthermore, in other words, the user cannot set the EM only by directly operating the smartphone 100 by hand, and thus, the remote controller 10 is always required in order to set the EM and continue the image capturing after the detection of high temperature.

With this configuration, the user can be prevented from being exposed to danger caused by heat generation due to a high load at the time of using the application.

The description is made more specifically. In the information processing method according to the embodiment of the present disclosure, as illustrated in FIG. 3, regarding an execution state of the camera application, four states are mainly used, the states including a combination of the state of the remote controller 10 and the state of the EM during activation of the camera application.

The first state is a state of "Remote Controller OFF" in which the remote controller 10 is not connected, and corresponds to an example of a "first execution state". The second state is a state of "Remote Controller ON (EM OFF)" in which the remote controller is ON but the EM is OFF, and corresponds to an example of a "second execution state".

The third state is a state of "Remote Controller ON (EM Inactive)" in which the remote controller is ON and the EM is also ON, but the EM is not activated, and corresponds to an example of a "third execution state". The fourth state is a state of "Remote Controller ON (EM Active)" in which the remote controller is ON and the EM is also ON, and the EM is activated, and corresponds to an example of a "fourth execution state".

First, when the temperature of the smartphone 100 reaches a predetermined warning threshold, the above-described high-temperature detection mark is displayed on the display unit 103 of the smartphone 100 in any of the first to fourth states. Then, in the first state, when the temperature of the smartphone 100 reaches a predetermined high-temperature threshold, the camera application is immediately terminated.

However, at this time, a dialog D1 as illustrated in FIG. 4 is displayed on the display unit 103. As illustrated in FIG. 4, in the dialog D1, along with the content of notifying the user of termination of the camera application, notification of a guidance prompting connection of the remote controller is provided, such as "BY CONNECTING REMOTE CONTROLLER, APPLICATION CAN BE CONTINUOUSLY USED IN IMAGE CAPTURE ENDURANCE MODE."

Furthermore, also in the second state, when the temperature of the smartphone 100 reaches a predetermined high-temperature threshold, the camera application is immediately terminated. However, at this time, a dialog D2 as illustrated in FIG. 5 is displayed on the display unit 103.

As illustrated in FIG. 5, in the dialog D2, along with the content of notifying the user of termination of the camera application, notification of a guidance prompting setting of turning the EM ON is provided, such as "BY TURNING IMAGE CAPTURE ENDURANCE MODE ON, APPLICATION CAN BE CONTINUOUSLY USED BY REMOTE CONTROLLER.".

As illustrated in FIGS. 4 and 5, by having provided notification of guidance according to the connection state of the remote controller 10 and the state of the EM, the user can be prevented from being exposed to danger caused by heat generation due to a high load at the time of using the camera application, and the user can be recommended to perform an appropriate operation in a case where the user desires to continue image capturing.

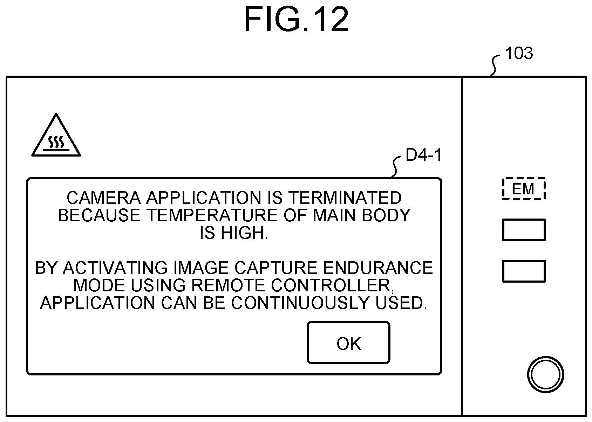

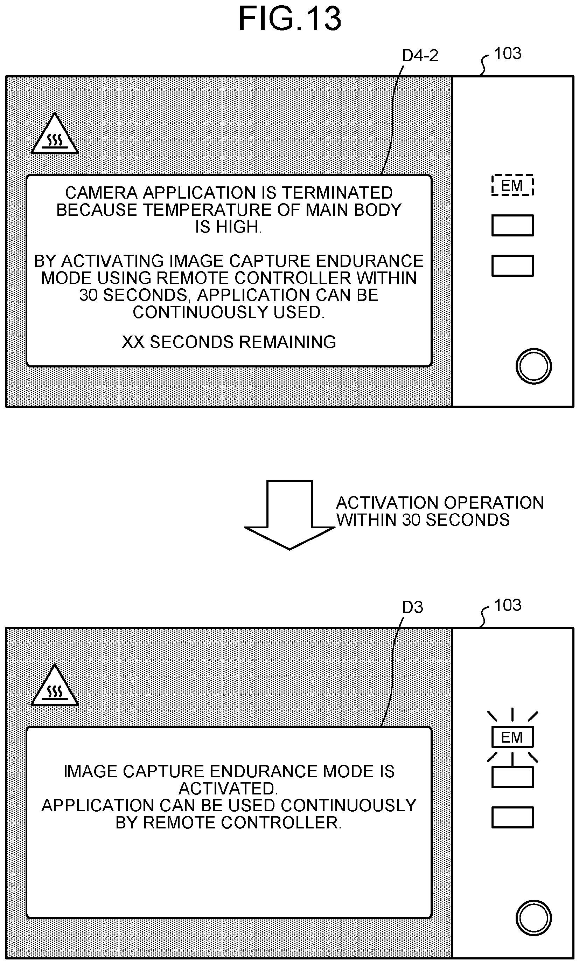

The description returns to FIG. 3. Furthermore, also in the third state, when the temperature of the smartphone 100 reaches a predetermined high-temperature threshold, the camera application is immediately terminated. However, also at this time, a dialog similar to that illustrated in FIGS. 4 and 5 is displayed on the display unit 103. Such a dialogue will be described later with reference to FIG. 12. Note that, in the third state, as illustrated in FIG. 3, the camera application may not be immediately terminated, and a predetermined interval i may be given before the termination. For example, in the third state, when the user performs operation of activation (that is, activates) the EM by using the remote controller 10 during the interval i, the state may transit to the fourth state, and the user may be able to continuously perform image capturing. This point will be described later with reference to FIG. 13 and the like. Note that any operation can be used as the operation of the remote controller 10 for activating the EM. For example, in a case where the user presses any of operation buttons (not illustrated) included in the remote controller 10, the smartphone 100 may activate the EM.

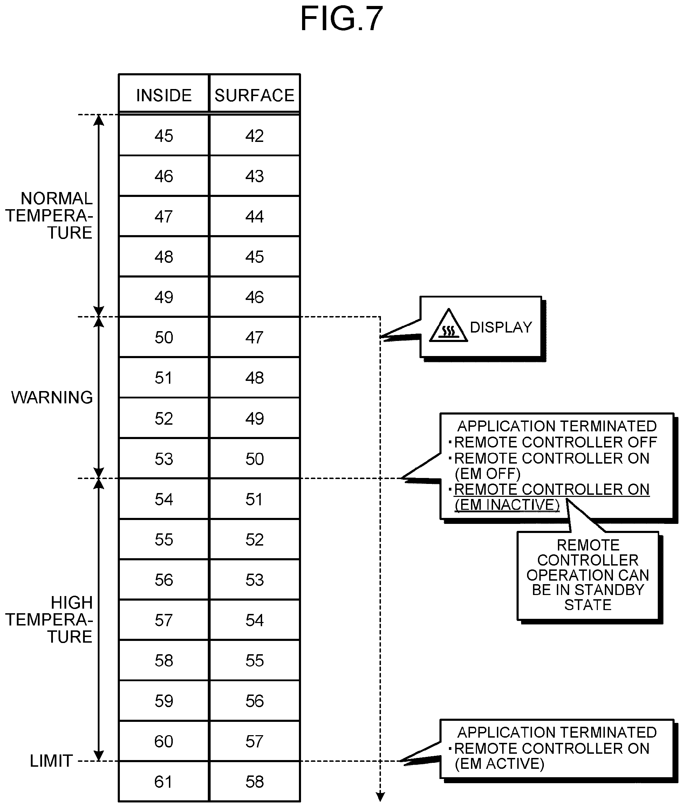

Furthermore, in the fourth state, even when the temperature of the smartphone 100 reaches the predetermined high-temperature threshold, the camera application is not immediately terminated, and the user can continuously perform image capturing by using the remote controller 10. However, when the temperature of the smartphone 100 reaches a predetermined limit threshold, the camera application is immediately terminated. That is, when the temperature exceeds the limit threshold value, the risk that the user will suffer a high-temperature burn increases, and thus the camera application is unconditionally terminated. Note that a specific example of each threshold and an operation corresponding thereto will be described later with reference to FIG. 7.

As described above, the information processing method according to the embodiment of the present disclosure is an information processing method executed by the smartphone 100, in which the temperature of the main body of the smartphone 100 is monitored and the application is executed, and in a case where notification of an increase in the temperature of the main body to a predetermined high-temperature range is provided by monitoring the temperature, operation from the remote controller 10 is required for the operation of maintaining the operation of the application.

Therefore, according to the information processing method according to the embodiment of the present disclosure, the user can be prevented from being exposed to danger caused by heat generation due to a high load.

Hereinafter, a configuration example of the smartphone 100 to which the information processing method according to the embodiment of the present disclosure is applied is described more specifically.

### <<2. Configuration of Smartphone>>

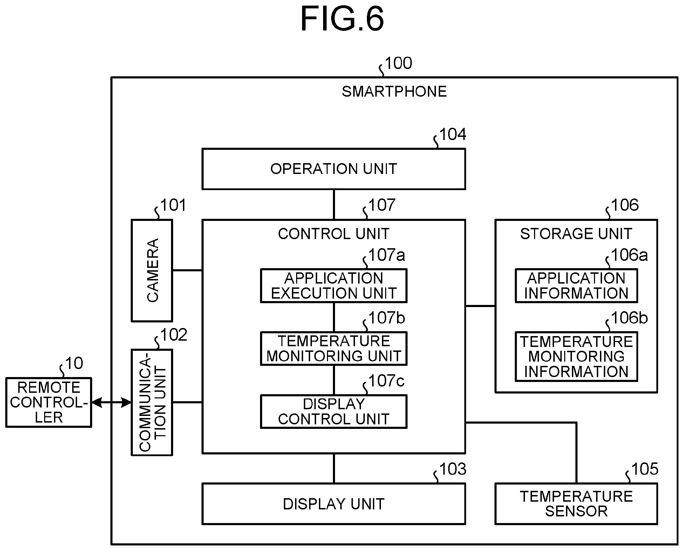

FIG. 6 is a block diagram illustrating a configuration example of the smartphone 100 according to the embodiment of the present disclosure. Note that FIG. 6 illustrates only constituents necessary for describing features of the embodiment of the present disclosure, and omits description of general constituents.

In other words, each constituent illustrated in FIG. 6 is functionally conceptual, and does not necessarily have to be physically configured as illustrated. For example, a specific form of distribution and integration of each block is not limited to the illustrated form, and all or a part thereof can be functionally or physically distributed and integrated in an optional unit according to various loads, usage conditions, and the like.

Furthermore, in the description using FIG. 6, there are cases where the description of the already described constituents is simplified or omitted.

As illustrated in FIG. 6, the smartphone 100 includes a camera 101, a communication unit 102, a display unit 103, an operation unit 104, a temperature sensor 105, a storage unit 106, and a control unit 107.

The camera 101 is a camera mounted on the main body of the smartphone 100, and includes an out-camera and an in-camera. The communication unit 102 is a connection interface component with the remote controller 10, and performs Bluetooth connection with the remote controller 10 in the embodiment of the present disclosure.

The display unit 103 is a liquid crystal panel mounted on the main body of the smartphone 100. The operation unit 104 is an operation component mounted on the main body of the smartphone 100. Note that the operation unit 104 may be configured integrally with the display unit 103 by a touch panel. Therefore, the operation unit 104 may be a software component, and in the embodiment of the present disclosure, the operation unit 104 may be, for example, a graphical user interface (GUI) that causes the camera application to be operably displayed on the display unit 103.

The temperature sensor 105 is mounted in the main body of the smartphone 100 and detects the temperature in the main body.

The storage unit 106 is realized by, for example, a semiconductor memory element such as a random access memory (RAM), a read only memory (ROM), or a flash memory. In the example illustrated in FIG. 6, the storage unit 106 stores application information 106a and temperature monitoring information 106b.

The application information 106a is information including a program of the camera application, various parameters used during activation of the camera application, and the like. The temperature monitoring information 106b is information in which each threshold described above is associated with an operation corresponding to each threshold.

FIG. 7 is a diagram illustrating an example of the temperature monitoring information 106b. As illustrated in FIG. 7, in the temperature monitoring information 106b, for example, each threshold is set in the table of the temperature of the inside and the surface of the smartphone 100. Note that, in the embodiment of the present disclosure, because the temperature sensor 105 detects the temperature inside the smartphone 100, the temperature of the surface is converted from the temperature of the inside. Hereinafter, the temperature of the inside is described as an example.

In the example in FIG. 7, the temperature of the inside from 45°C to 49°C is set to a "normal temperature" range, the temperature from 50°C to 53°C is set to a "warning" range, the temperature from 54°C to 60°C is set to a "high temperature" range, and the temperature of 61°C is set to a "limit".

In addition, in the example in FIG. 7, the temperature reaching "warning" or more means that the above-described high-temperature detection mark is displayed on the display unit 103.

In addition, when the temperature reaches the "high temperature", in the case of the first to third states of "Remote Controller OFF", "Remote Controller ON (EM OFF)", and "Remote Controller ON (EM Inactive)" described with reference to FIG. 3, it means that the camera application is terminated. Note that the state of "Remote Controller ON (EM Inactive)" means that the operation of the remote controller 10 can be in a standby state. This corresponds to the content regarding the interval i described above.

Furthermore, in the example in FIG. 7, when the temperature reaches the "limit", it means that the camera application is terminated even in the state of "Remote Controller ON (EM Active)". Note that a process other than the camera application causes the display unit 103 to display the high-temperature detection mark to allow the high-temperature detection mark to be continuously displayed even when the camera application is terminated.

The description returns to FIG. 6. The control unit 107 is a controller, and is implemented by, for example, a central processing unit (CPU), a micro processing unit (MPU), or the like executing various programs stored in the storage unit 106 using the RAM as a work area. Furthermore, the control unit 107 can be realized by, for example, an integrated circuit such as an application specific integrated circuit (ASIC) or a field programmable gate array (FPGA).

The control unit 107 includes an application execution unit 107a, a temperature monitoring unit 107b, and a display control unit 107c, and realizes or executes a function and an action of information processing described below.

The application execution unit 107a reads the application information 106a stored in the storage unit 106 and executes the camera application. In addition, the application execution unit 107a changes the execution content of the camera application according to the temperature of the smartphone 100 monitored by the temperature monitoring unit 107b and to the temperature monitoring information 106b.

For example, upon receiving EM activation/deactivation operation from the user via the remote controller 10, the application execution unit 107a notifies the temperature monitoring unit 107b of the EM activation/deactivation operation.

Furthermore, the application execution unit 107a causes the display control unit 107c to perform display control so as to allow various types of information corresponding to the execution content of the camera application to be displayed on the display unit 103.

The temperature monitoring unit 107b acquires a sensor value of the temperature sensor 105 and monitors the temperature of the smartphone 100. In addition, in a case where the temperature to be monitored reaches each threshold of the temperature monitoring information 106b, the temperature monitoring unit 107b notifies the application execution unit 107a of this fact. Note that the temperature monitoring unit 107b corresponds to middleware that resides in the control unit 107 and is executed.

Furthermore, upon receiving notification of the EM activation/deactivation from the application execution unit 107a, the temperature monitoring unit 107b compares, with the content corresponding to the notification, the temperature to be monitored with the temperature monitoring information 106b.

In addition, the temperature monitoring unit 107b causes the display control unit 107c to perform display control to allow the high-temperature detection mark to be displayed on the display unit 103 when the temperature of the smartphone 100 is equal to or higher than the warning threshold described above.

The display control unit 107c performs display control to allow necessary information to be displayed on the display unit 103 in accordance with instructions from the application execution unit 107a and the temperature monitoring unit 107b.

### <<3. State Transition>>

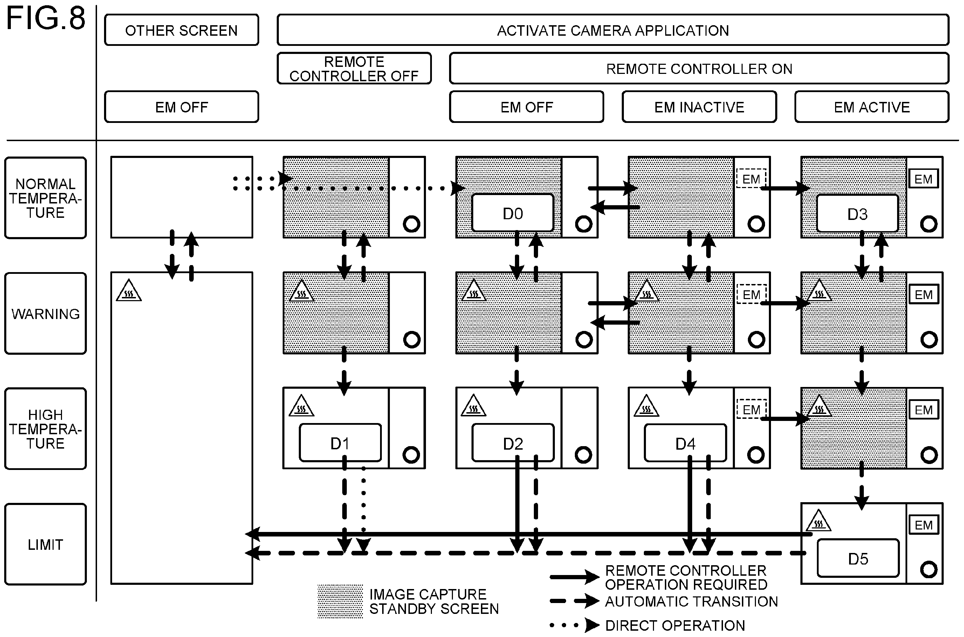

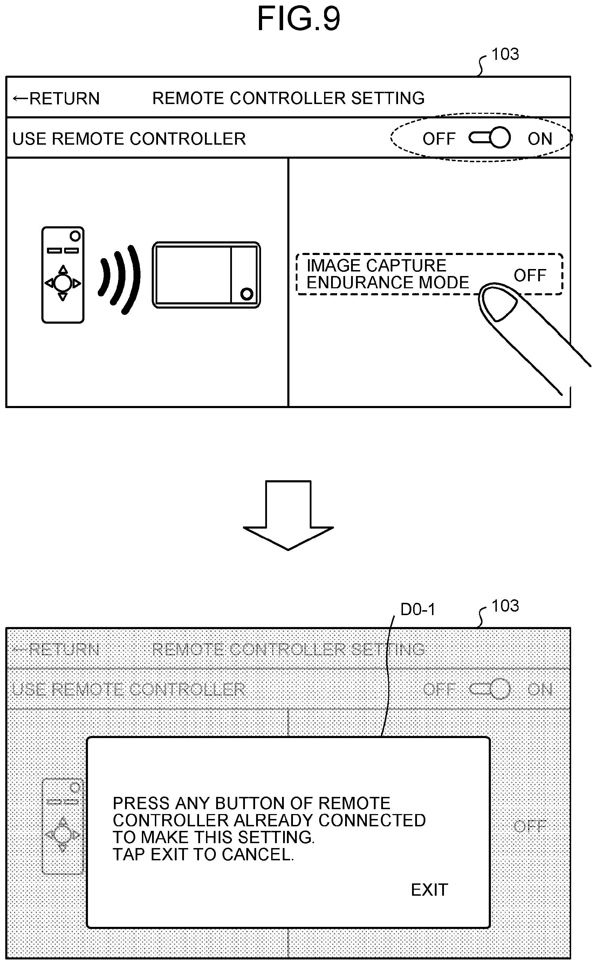

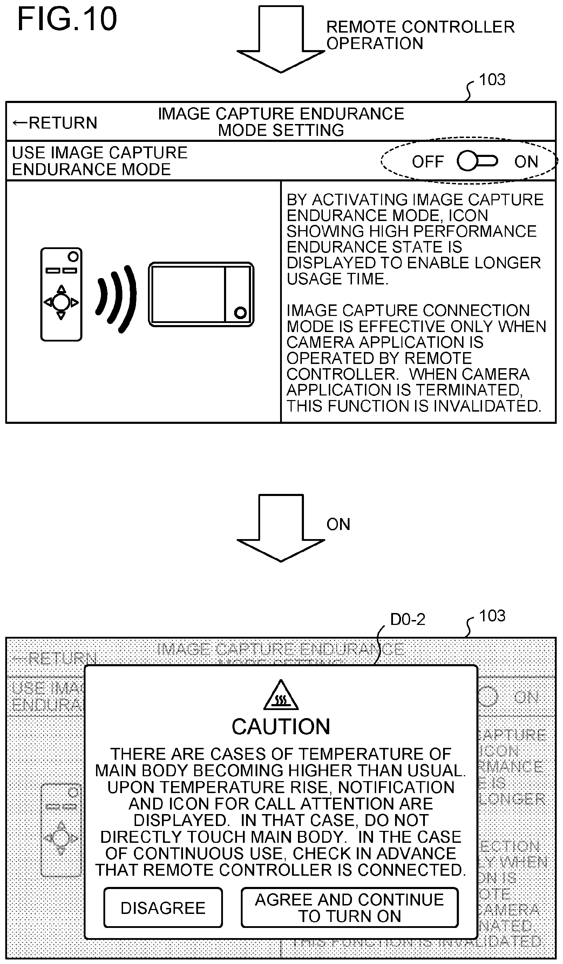

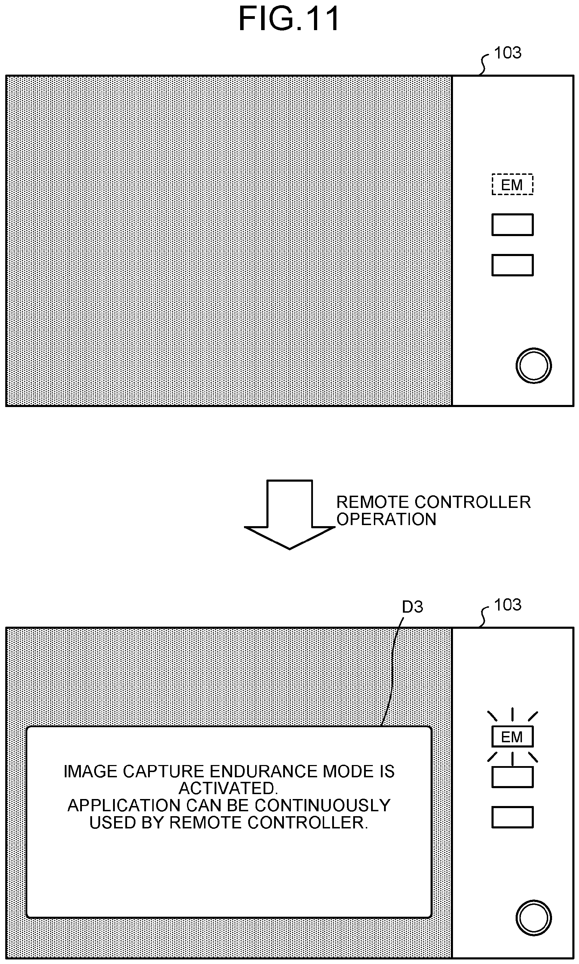

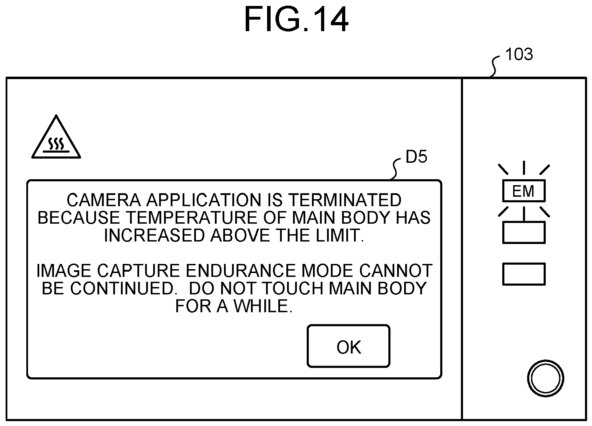

Next, a state transition in the information processing according to the embodiment of the present disclosure is described. FIG. 8 is a diagram illustrating a state transition in the information processing according to the embodiment of the present disclosure. Note that "Image capture standby screen" in the drawing refers to a so-called preview screen on which a camera-through image of the smartphone 100 is displayed. In addition, a dialog D0 in the drawing will be described later with reference to FIGS. 9 and 10. In addition, a dialog D3 in the drawing will be described later with reference to FIG. 11. In addition, a dialog D4 in the drawing will be described later with reference to FIGS. 12 and 13. In addition, a dialog D5 in the drawing will be described later with reference to FIG. 14.

As illustrated in FIG. 8, in the information processing according to the embodiment of the present disclosure, first, it can be seen that the operation of the remote controller is always required for the transition to the EM ON state, that is, the third state of "Remote Controller ON (EM Inactive)" and the fourth state of "Remote Controller ON (EM Active)".

Therefore, when the temperature of the smartphone 100 rises to the high-temperature range during the activation of the camera application in the remote controller OFF state, the dialog D1 illustrated in FIG. 4 is displayed on the display unit 103, and the camera application is terminated.

Furthermore, also in the case of the state of "Remote Controller ON (EM OFF)", when the temperature of the smartphone 100 rises to the high-temperature range during the activation of the camera application, the dialog D2 illustrated in FIG. 5 is basically displayed on the display unit 103, and the camera application is terminated.

The remote controller ON/OFF setting can be set from a remote controller setting screen that can be transited from the menu of the camera application. When the remote controller 10 is enabled on the remote controller setting screen and the remote controller 10 and the smartphone 100 are connected with each other, the display of the operation component for the ON/OFF operation of the EM is operably enabled on the remote controller setting screen.

The description is made more specifically. FIG. 9 is a diagram (part 1) illustrating a display example of the setting screen in a case where the EM is turned ON. FIG. 10 is a diagram (part 2) illustrating a display example of the setting screen in a case where the EM is turned ON.

The menu of the camera application can transit to the remote controller setting screen as illustrated in the upper diagram in FIG. 9. In the remote controller setting screen, an ON/OFF switch that enables setting of whether or not the remote controller 10 can be used in the camera application is displayed (see a portion of a closed-curve broken line in the drawing).

When the user turns ON the ON/OFF switch for use of the remote controller and performs a necessary pairing operation by, for example, Bluetooth, the remote controller 10 and the smartphone 100 are connected with each other, and the display of the operation components for the ON/OFF operation of the EM is operably enabled (see a portion of a rectangular broken line in the drawing).

Then, here, when the user performs a tap operation on such an operation component, for example, a dialog D0-1 as illustrated in the lower diagram in FIG. 9 is displayed on the display unit 103. In the dialog D0-1, a guidance prompting a remote controller operation by the remote controller 10 such as "PRESS ANY BUTTON ON THE REMOTE CONTROLLER ALREADY CONNECTED TO MAKE THIS SETTING." is displayed. Here, by requesting the remote controller operation, it is possible to confirm whether or not the remote controller 10 necessary for use of the EM is actually connected. Note that, in the case of cancellation, the user is required to, for example, tap EXIT.

Then, for example, when the user performs a remote controller operation of pressing any button on the remote controller 10, the camera application receives an event signal of the remote controller operation, and displays an EM setting screen on the display unit 103 as illustrated in the upper diagram in FIG. 10. In the EM setting screen, the ON/OFF switch that enables setting of whether or not the EM can be used in the camera application is displayed (see a portion of a closed-curve broken line in the drawing). In addition, an explanation item and the like in a case where the EM is used and the EM is activated are displayed.

Then, when the user turns ON the ON/OFF switch for the use of EM, a dialog D0-2 as illustrated in the lower diagram in FIG. 10 is displayed on the display unit 3. In the dialog D0-2, for example, along with the content of call attention in a case where the EM is turned ON, the content inquiring whether or not to turn ON the EM as it is in agreement with the content of the call attention is displayed.

Then, when the user checks the dialog D0-2 and selects "AGREE AND CONTINUE TO TURN ON", the execution state of the camera application transitions to the EM ON state. FIG. 11 is a diagram illustrating a display example in a case where the state transits to EM ON.

As illustrated in the upper diagram in FIG. 11, when the state transits to the EM ON state, a GUI of "EM" indicating the EM ON state is displayed together with the preview screen described above on the display unit 103. Note that, in the upper diagram in FIG. 11, the GUI of "EM" is indicated by a broken line, which indicates that the execution state of the camera application is the state of "Remote Controller ON (EM Inactive)" which is the third state, and the GUI of "EM" which has not been displayed until the second state is displayed in, for example, gray display or the like.

Then, from the third state, when the user performs, for example, any remote controller operation using the remote controller 10, that is, the EM activation operation, the execution state of the camera application transits to the state of "Remote Controller ON (EM Active)" which is the fourth state. Then, at this time, as illustrated in the lower diagram in FIG. 11, for example, the display unit 103 displays the content such as "IMAGE CAPTURE ENDURANCE MODE IS ACTIVATED. APPLICATION CAN BE CONTINUOUSLY USED BY REMOTE CONTROLLER.", which is the dialog D3, is displayed. In addition, display control such as blinking of the GUI of "EM" is also performed so that it is clearly indicated that the EM has become active, that is, EM is operated.

The description returns to FIG. 8. In contrast to the case where the EM is activated, for example, when the temperature of the smartphone 100 rises from the state of "Remote Controller ON (EM Inactive)" which is the third state to the high-temperature range without having the EM activated, a dialog D4-1 as illustrated in FIG. 12 is displayed on the display unit 103. FIG. 12 is a diagram (part 1) illustrating a display example in a case where the temperature rises to the high-temperature range in the state of "Remote Controller ON (EM Inactive)".

FIG. 12 illustrates an example of a case where the camera application is immediately terminated as in the case of the dialogues D1 and D2. That is, as illustrated in FIG. 12, on the display unit 103, the dialog D4-1 with contents providing notification that the camera application is to be terminated due to high temperature is displayed. Note that, as illustrated in FIG. 12, along with the content of notifying the user of termination of the camera application, the dialog D4-1 may be the one that includes the content that provides notification of a guidance prompting activation of the EM, such as "BY ACTIVATING IMAGE CAPTURE ENDURANCE MODE USING REMOTE CONTROLLER, APPLICATION CAN BE CONTINUOUSLY USED.". With this configuration, the user can be recommended to perform an appropriate operation to be performed in a case where the user desires to continue image capturing.

Furthermore, as described above, in such a case, when the user performs an operation of activating the EM during the interval i described above, the transition to the state of "Remote Controller ON (EM Active)" which is the fourth state may be enabled. FIG. 13 is a diagram (part 2) illustrating a display example in a case where the temperature rises to the high-temperature range in the state of "Remote Controller ON (EM Inactive)".

Specifically, as illustrated in the upper drawing in FIG. 13, a dialog D4-2 is displayed on the display unit 103, the dialog including, along with the content of notifying the user of termination of the camera application, the content such as "BY ACTIVATING IMAGE CAPTURE ENDURANCE MODE USING REMOTE CONTROLLER WITHIN 30 SECONDS, APPLICATION CAN BE CONTINUOUSLY USED.". As illustrated in the upper diagram in FIG. 13, the remaining time at this time such as "XX SECONDS REMAINING" may be displayed in countdown.

Then, in response to this, when the user performs the activation operation within the interval i, as illustrated in the lower diagram in FIG. 13, for example, the dialog D3 for notifying the user of activation of the EM illustrated in FIG. 11 is displayed on the display unit 103.

The description returns to FIG. 8. In addition, when the temperature of the smartphone 100 further increases and reaches the limit range although the EM is activated, a dialog D5 as illustrated in FIG. 14 is displayed on the display unit 103. FIG. 14 is a diagram illustrating a display example in a case where the temperature rises to the limit range in the state of "Remote Controller ON (EM Active)".

Specifically, in such a case, as illustrated in FIG. 14, a dialog D5 is displayed on the display unit 103, the dialog including, along with the content of notifying the user of termination of the camera application, the content of warning such as "IMAGE CAPTURE ENDUR_ANCE MODE CANNOT BE CONTINUED. DO NOT TOUCH MAIN BODY FOR A WHILE.". With this configuration, the risk that the user directly touches the main body of the smartphone 100 can be alleviated.

Incidentally, in a case where the camera application is terminated, for example, "WHEN CAMERA APPLICATION IS TERMINATED, THIS FUNCTION IS INVALIDATED." is indicated in the explanation item in the case of the EM being activated in the upper diagram in FIG. 10, but this may mean to cancel the EM ON setting or to hold the EM ON setting.

In a case where the invalidation means to hold the function, when the camera application is reactivated, the execution state of the camera application may be automatically returned to the EM-ON state. The same applies not only to a case where the camera application is reactivated, but also to a case where a screen of another application other than a preview screen is displayed in the foreground instead of the preview screen of the camera application by a screen switching operation or the like of the smartphone 100 during the activation of the camera application, and thereafter, the preview screen of the camera application is displayed in the foreground again.

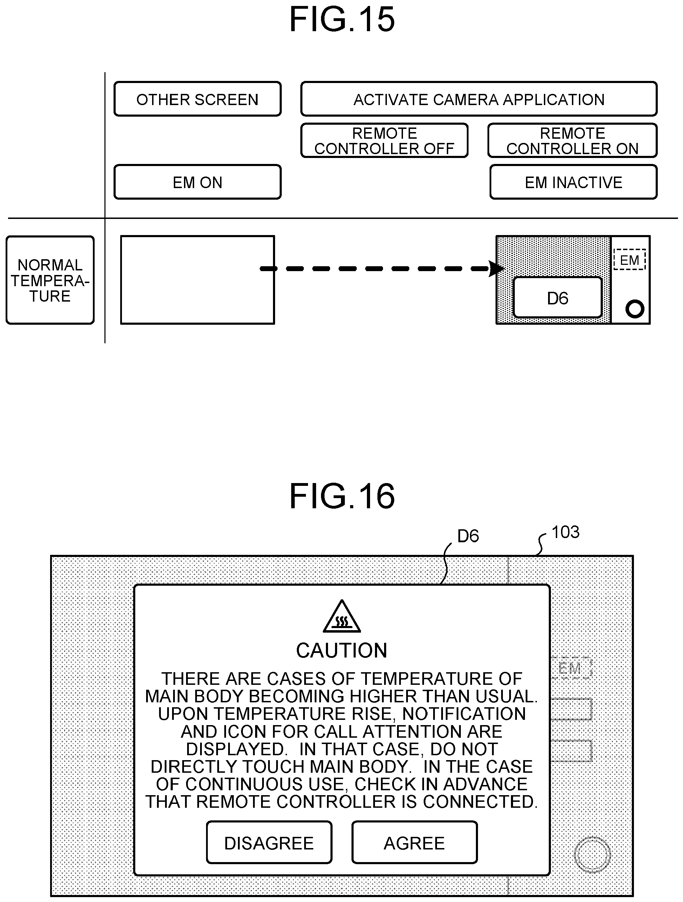

FIG. 15 is an explanatory diagram in a case where the EM ON setting is held and the state returns in the EM ON state. Furthermore, FIG. 16 is a diagram illustrating a display example in such a case.

In such a case, as illustrated in FIG. 15, the execution state of the camera application returns to the EM ON state, and when the remote controller ON state is confirmed, for example, when some remote controller operation is performed, the state transits to the state of "Remote Controller ON (EM Inactive)" which is the third state.

At this time, a dialog D6 as illustrated in FIG. 16 is displayed on the display unit 103. Specifically, as illustrated in FIG. 16, in the dialog D6, for example, similarly to the dialog D0-2 illustrated in the lower diagram in FIG. 10, a dialog D6 is displayed, the dialog including, along with the content of call attention in a case where the EM is activated, the content inquiring whether or not to agree with the content of the call attention.

Then, when the user selects "AGREE" at this point, the state transits to the state of "Remote Controller ON (EM Active)" which is the fourth state, and the EM is activated. Then, for example, display as illustrated in the lower diagram in FIG. 11 is performed on the display unit 103.

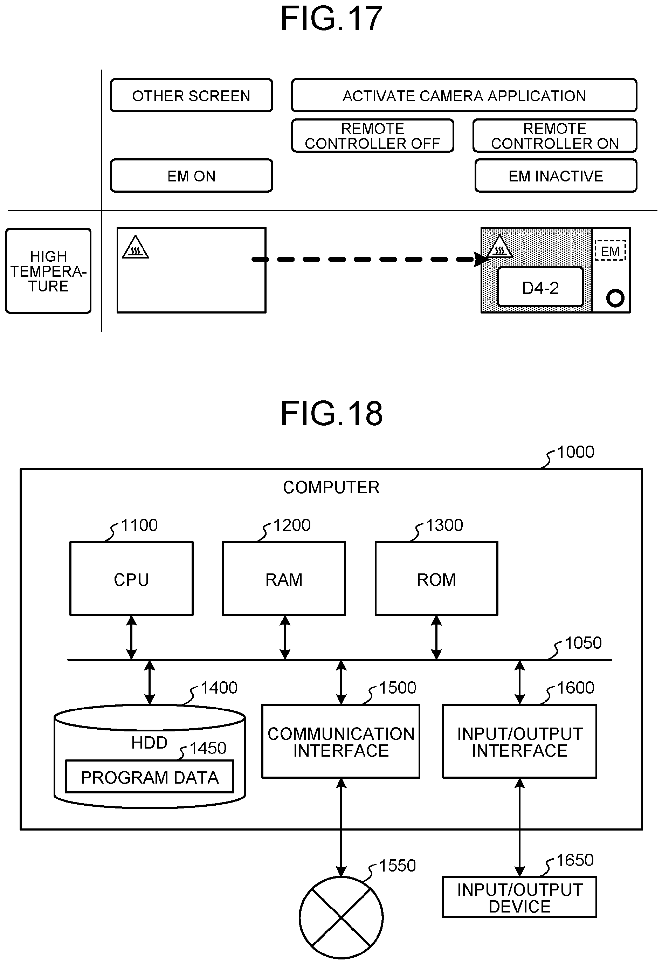

Furthermore, in a case where the camera application is activated in a state where the main body of the smartphone 100 is at high temperature in a case where the EM ON setting is held, the camera application is not simply terminated as an error, but similarly to the description with reference to FIG. 13, the activation operation by the remote controller 10 may be received during the predetermined interval i. FIG. 17 is an explanatory diagram in a case where the EM ON setting is held and the camera application is activated at high temperature.

As illustrated in FIG. 17, in a case where the EM ON setting is held and the camera application is activated at high temperature, the execution state of the camera application transits to the state of "Remote Controller ON (EM Inactive)" which is the third state, similarly to the state illustrated in FIG. 15.

Then, the dialog D4-2 as illustrated in, for example, the upper drawing in FIG. 13 is displayed on the display unit 103. That is, at this time, the remaining time such as "XX SECONDS REMAINING" is displayed in countdown on the dialog D4-2.

Then, in response to this, when the user performs the activation operation within the interval i, as illustrated in the lower diagram in FIG. 13, for example, the dialog D3 notifying the user of the activation of the EM is displayed on the display unit 103, and the user can use the camera application in the EM by the remote controller operation. Furthermore, after the user performs the EM ON setting according to the dialog illustrated in FIGS. 9 and 10 and the state transits to the third state of "Remote Controller ON (EM Inactive)" or the fourth state of "Remote Controller ON (EM Active)", there are cases where the connection between the remote controller 10 and the smartphone 100 is disconnected unintentionally by the user due to Bluetooth power saving specifications or the like. In this case, the state may be automatically returned to the third state or the fourth state before disconnection at the timing when the remote controller 10 and the smartphone 100 are automatically reconnected. With this configuration, the user can be saved from having to reset the EM ON setting according to the dialog illustrated in FIGS. 9 and 10 every time an unintended disconnection of the Bluetooth connection occurs.

### <<4. Modified Example>>

Meanwhile, the embodiment of the present disclosure described above can include several modifications.

In the embodiment of the present disclosure described above, an example has been described in which the remote controller 10 is connected to the smartphone 100 via Bluetooth, but it is sufficient as long as the wireless connection can be made, and a communication standard or the like is not taken into account.

Furthermore, in the embodiment of the present disclosure described above, the case of using the camera application has been described as an example, but the application is not limited, and for example, the application may be middleware or the like resident in the control unit 107. Note that, in such a case, the middleware or the like needs to include at least a user interface (UI) that can be remotely controlled by the remote controller 10.

Furthermore, among each type of processing described in the embodiments of the present disclosure described above, all or a part of the processing described as being performed automatically can be performed manually, or all or a part of the processing described as being performed manually can be performed automatically by a known method. In addition, the processing procedure, specific name, and information including various data and parameters illustrated in the document and the drawings can be optionally changed unless otherwise specified. For example, the various types of information illustrated in each drawing are not limited to the illustrated information.

Furthermore, each constituent of each device that has been illustrated is functionally conceptual, and does not necessarily have to be physically configured as illustrated. That is, a specific form of distribution and integration of each device is not limited to the illustrated form, and all or a part thereof can be functionally or physically distributed and integrated in an optional unit according to various loads, usage conditions, and the like.

Furthermore, the embodiment of the present disclosure described above can be appropriately combined in a region in which the processing contents do not contradict each other.

### <<5. Hardware Configuration>>

The smartphone 100 according to the embodiment of the present disclosure described above is realized by, for example, a computer 1000 having a configuration as illustrated in FIG. 16. FIG. 16 is a hardware configuration diagram illustrating an example of the computer 1000 that implements functions of the smartphone 100. The computer 1000 includes a CPU 1100, a RAM 1200, a ROM 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records a program according to the present disclosure which is an example of program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard or a mouse via the input/output interface 1600. Furthermore, the CPU 1100 transmits data to an output device such as a display, a speaker, or a printer via the input/output interface 1600. Furthermore, the input/output interface 1600 may function as a media interface that reads a program or the like recorded in a predetermined recording medium. The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the smartphone 100 according to the embodiment, the CPU 1100 of the computer 1000 implements the function of the control unit 107 by executing a program loaded on the RAM 1200. In addition, the HDD 1400 stores a program according to the present disclosure and data in the storage unit 106. Note that the CPU 1100 reads the program data 1450 from the HDD 1400 and executes the program data, but as another example, these programs may be acquired from another device via the external network 1550.

### <<6. Conclusion>>

As described above, according to the embodiment of the present disclosure, the smartphone 100 (which corresponds to an example of the "information processing device") is a portable information processing device, and includes: the temperature monitoring unit 107b that monitors the temperature of the main body of the smartphone 100; and the application execution unit 107a that executes the application, and in a case where notification of an increase in the temperature of the main body to a predetermined high-temperature range is provided by the temperature monitoring unit 107b, requires an operation from the remote controller 10 (which corresponds to an example of the "remote control device") for an operation of maintaining the operation of the application. With this configuration, the user can be prevented from being exposed to danger caused by heat generation due to a high load at the time of using the application.

Although the embodiments of the present disclosure have been described above, the technical scope of the present disclosure is not limited to the above-described embodiments as it is, and various modifications can be made without departing from the gist of the present disclosure. In addition, constituents of different embodiments and modifications may be appropriately combined.

Furthermore, the effects of each embodiment described in the present description are merely examples and are not limited, and other effects may be provided.

Note that the present technology can also have the following configurations.
(1) An information processing device of a portable type, comprising:
   a temperature monitoring unit that monitors a temperature of a main body of the information processing device; and
   an application execution unit that executes an application, and in a case where notification of an increase in the temperature of the main body to a predetermined high-temperature range is provided by the temperature monitoring unit, requires an operation from a remote control device for an operation of maintaining an operation of the application.
(2) The information processing device according to (1), wherein
   the application execution unit is configured to,
   in a case where an execution state of the application is a first state in which the remote control device is not connected to the information processing device, terminate the application when the notification of the increase in the temperature of the main body to the high-temperature range is provided.
(3) The information processing device according to (1) or (2), wherein
   the application execution unit is configured to,
   in a case where an execution state of the application is a second state in which the remote control device is connected to the information processing device and setting of a mode to cause the application to continuously operate is off, terminate the application when the notification of the increase in the temperature of the main body to the high-temperature range is provided.
(4) The information processing device according to (3), wherein
   the application execution unit is configured to,
   in a case where the execution state of the application is a third state in which the remote control device is connected to the information processing device and the setting of the mode is on but the mode is inactive, terminate the application when the notification of the increase in the temperature of the main body to the high-temperature range is provided.
(5) The information processing device according to (4), wherein
   the application execution unit causes the operation of the application to continue when an operation of activating the mode is received by an operation from the remote control device during a predetermined interval before the application is terminated.
(6) The information processing device according to (4) or (5), wherein,
   the application execution unit is provided to,
   in a case where the remote control device is connected to the information processing device after the application is activated,
   enable the mode to be activated by an operation from the remote control device when the execution state of the application transits to the third state.
(7) The information processing device according to any one of (3) to (6), wherein
   the application execution unit is configured to,
   in a case where the execution state of the application is a fourth state in which the remote control device is connected to the information processing device and the setting of the mode is on and the mode is active, cause an operation of the application to continue by an operation from the remote control device when the notification of the increase in the temperature of the main body to the high-temperature range is provided.
(8) The information processing device according to any one of (1) to (7), wherein
   the application execution unit terminates the application in a case where notification of the increase in the temperature of the main body to a predetermined limit range higher than the high-temperature range is provided.
(9) The information processing device according to any one of (1) to (8), wherein
   the application execution unit is configured to,
   in a case where notification of a fact that the temperature of the main body is equal to or higher than a predetermined warning range lower than the high-temperature range is provided, cause a graphical user interface (GUI) indicating that a high temperature is detected to be displayed on a display unit of the information processing device.
(10) A remote control device provided to enable remote control of an application executed by an information processing device of a portable type, the remote control device being configured to:
   in a case where a temperature of a main body of the information processing device increases to a predetermined high-temperature range, be requested to perform an operation from the remote control device for an operation of maintaining an operation of the application.
(11) An information processing method executed by an information processing device of a portable type, the information processing method comprising:
   monitoring a temperature of a main body of the information processing device; and
   in a case where notification of an increase in the temperature of the main body to a predetermined high-temperature range is provided by the monitoring of the temperature, requiring an operation from a remote control device for an operation of maintaining an operation of the application.
(12) A remote control method using a remote control device provided to enable remote control of an application executed by an information processing device of a portable type, the remote control method comprising:
   in a case where a temperature of a main body of the information processing device increases to a predetermined high-temperature range, requesting an operation from the remote control device for an operation of maintaining an operation of the application.

### Reference Signs List

- 10: REMOTE CONTROLLER
- 100: SMARTPHONE
- 101: CAMERA
- 102: COMMUNICATION UNIT
- 103: DISPLAY UNIT
- 104: OPERATION UNIT
- 105: TEMPERATURE SENSOR
- 106: STORAGE UNIT
- 106a: APPLICATION INFORMATION
- 106b: TEMPERATURE MONITORING INFORMATION
- 107: CONTROL UNIT
- 107a: APPLICATION EXECUTION UNIT
- 107b: TEMPERATURE MONITORING UNIT
- 107c: DISPLAY CONTROL UNIT

## Claims

1. An information processing device of a portable type, comprising:
a temperature monitoring unit that monitors a temperature of a main body of the information processing device; and
an application execution unit that executes an application, and in a case where notification of an increase in the temperature of the main body to a predetermined high-temperature range is provided by the temperature monitoring unit, requires an operation from a remote control device for an operation of maintaining an operation of the application.

2. The information processing device according to claim 1, wherein
the application execution unit is configured to,
in a case where an execution state of the application is a first state in which the remote control device is not connected to the information processing device, terminate the application when the notification of the increase in the temperature of the main body to the high-temperature range is provided.

3. The information processing device according to claim 1, wherein
the application execution unit is configured to,
in a case where an execution state of the application is a second state in which the remote control device is connected to the information processing device and setting of a mode to cause the application to continuously operate is off, terminate the application when the notification of the increase in the temperature of the main body to the high-temperature range is provided.

4. The information processing device according to claim 3, wherein
the application execution unit is configured to,
in a case where the execution state of the application is a third state in which the remote control device is connected to the information processing device and the setting of the mode is on but the mode is inactive, terminate the application when the notification of the increase in the temperature of the main body to the high-temperature range is provided.

5. The information processing device according to claim 4, wherein
the application execution unit causes the operation of the application to continue when an operation of activating the mode is received by an operation from the remote control device during a predetermined interval before the application is terminated.

6. The information processing device according to claim 4, wherein,
the application execution unit is provided to,
in a case where the remote control device is connected to the information processing device after the application is activated,
enable the mode to be activated by an operation from the remote control device when the execution state of the application transits to the third state.

7. The information processing device according to claim 3, wherein
the application execution unit is configured to,
in a case where the execution state of the application is a fourth state in which the remote control device is connected to the information processing device and the setting of the mode is on and the mode is active, cause an operation of the application to continue by an operation from the remote control device when the notification of the increase in the temperature of the main body to the high-temperature range is provided.

8. The information processing device according to claim 1, wherein
the application execution unit terminates the application in a case where notification of the increase in the temperature of the main body to a predetermined limit range higher than the high-temperature range is provided.

9. The information processing device according to claim 1, wherein
the application execution unit is configured to,
in a case where notification of a fact that the temperature of the main body is equal to or higher than a predetermined warning range lower than the high-temperature range is provided, cause a graphical user interface (GUI) indicating that a high temperature is detected to be displayed on a display unit of the information processing device.

10. A remote control device provided to enable remote control of an application executed by an information processing device of a portable type, the remote control device being configured to:
in a case where a temperature of a main body of the information processing device increases to a predetermined high-temperature range, be requested to perform an operation from the remote control device for an operation of maintaining an operation of the application.

11. An information processing method executed by an information processing device of a portable type, the information processing method comprising:
monitoring a temperature of a main body of the information processing device; and
in a case where notification of an increase in the temperature of the main body to a predetermined high-temperature range is provided by the monitoring of the temperature, requiring an operation from a remote control device for an operation of maintaining an operation of the application.

12. A remote control method using a remote control device provided to enable remote control of an application executed by an information processing device of a portable type, the remote control method comprising:
in a case where a temperature of a main body of the information processing device increases to a predetermined high-temperature range, requesting an operation from the remote control device for an operation of maintaining an operation of the application.
